# DEMANDE DE BREVET EUROPEEN

(11) **EP 1 765 039 A1**
(43) Date de publication de la demande: **21.03.2007**
(21) Numéro de dépôt: 06300965.8
(22) Date de dépôt: 20.09.2006
(51) Int. Cl.: H05B 33/08

(54) **Dispositif pour produire un eclairage blanc et procede de mise au point du degre de blancheur dudit eclairage**

(30) Priorité: 20.09.2005 FR 0552815
(71) Demandeur: Peugeot Citroen Automobiles Société Anonyme, 78140 Velizy Villacoublay (FR)
(72) Inventeur: VANSSON, Frédéric, 70400, HERICOURT (FR)
(74) Mandataire: Fernandez, Francis Lionel

(57) **Abrégé**

- Il comprend une source de tension d'alimentation électrique, une pluralité de diodes électroluminescentes blanches (a) réparties sur un support (1), un premier moyen de réglage (10) pour régler l'intensité d'éclairage de ladite pluralité de diodes électroluminescentes blanches (a). Il comprend également, sur ledit support (1), au moins une diode électroluminescente bleue (b), un second moyen de réglage (20) pour régler l'intensité d'éclairage de ladite diode électroluminescente bleue (b). Le premier moyen de réglage (10) et le second moyen de réglage (20) sont actionnables de manière indépendante.

- Combinés planches de bord de véhicules automobiles.

## Description

La présente invention concerne un dispositif pour produire un éclairage blanc, en particulier mais de façon non limitative pour produire un éclairage blanc de combinés de planche de bord de véhicule automobile. Elle concerne également un procédé de mise au point du degré de blancheur de la lumière émise par un tel dispositif, en particulier un tel procédé applicable à la mise au point du degré de blancheur de la lumière émise dans le processus de fabrication en série desdits dispositifs.

On utilise de plus en plus un éclairage blanc pour les combinés de planche de bord.

Afin d'obtenir une lumière blanche, plusieurs technologies sont connues de l'art antérieur.

Les tubes à cathode froide, comme par exemple le tube néon, permettent d'obtenir le blanc le plus pur. Bien que de bon rendement, de tels tubes sont relativement coûteux et, de plus, sont amenés à disparaître du fait de la présence de matériaux interdits, tels que le mercure par exemple.

Une autre technologie d'obtention d'une lumière blanche est celle des ampoules, de coût moins élevé. Mais la plus grande partie de l'énergie électrique se dissipe en chaleur et, de ce fait, la durée de vie est assez limitée. Les ampoules présentent d'autres désavantages, parmi lesquels une autonomie réduite, une baisse progressive de l'intensité en fonction de l'usure de la batterie, un éclairage à portée limitée et surtout un éclairage qui tend vers le jaune.

La technologie des diodes électroluminescentes ou LED (« Light Emitting Device ») s'avère la solution la plus adaptée et la plus rentable. Les LEDs ont une durée de vie exceptionnelle, un rendement supérieur à celui d'une ampoule à incandescence, résistent aux chocs, et le nombre d'allumages et d'extinctions n'influe pas sur leur durée de vie.

Par contre, le process lié à la technologie des LEDs blanches ne permet pas de garantir une couleur uniforme et identique pour chacune des pièces fabriquées. En effet, contrairement aux autres LEDs, l'obtention de la lumière blanche nécessite une phase process supplémentaire. La raison en est qu'il n'existe pas de LED « blanche » proprement dite ; c'est, en fait, la réunion d'un matériau électroluminescent allié à un matériau phosphorescent qui permet d'obtenir cette lumière blanche. En d'autres termes, la phase de process supplémentaire consiste à ajouter une couche de phosphore sur une LED existante ; le plus souvent, on utilise une LED bleue à laquelle est ajoutée une couche de phosphore pour arriver à la couleur blanche. Ce qui explique qu'une telle LED blanche peut souvent présenter une lumière bleutée ou « froide » qui n'est pas forcément au goût de tout le monde, ou une lumière blanche qui tend vers le jaune. Ce qui explique également une certaine dispersion au niveau du rendu de la couleur blanche obtenue dans une fabrication en série : il est pratiquement impossible d'avoir deux éclairages de combinés de planche de bord de la même couleur entre deux campagnes de fabrication de LEDs blanches.

Le but de la présente invention est de réaliser un dispositif de production de lumière blanche ajustable de manière à permettre une fabrication en série sans problèmes de dispersion au niveau du rendu de la couleur.

Un autre but de la présente invention est de réaliser un tel dispositif qui soit fiable, relativement simple, robuste et peu coûteux.

Pour atteindre ces buts, le dispositif pour produire un éclairage blanc, selon l'invention, comprend une source de tension d'alimentation électrique, une pluralité de diodes électroluminescentes blanches réparties sur un support, un premier moyen de réglage pour régler l'intensité d'éclairage de ladite pluralité de diodes électroluminescentes blanches, caractérisé en ce qu'il comprend, de plus, sur ledit support, au moins une diode électroluminescente bleue, un second moyen de réglage pour régler l'intensité d'éclairage de ladite diode électroluminescente bleue, et en ce que lesdits premier et second moyens de réglage sont actionnables de manière indépendante.

Selon un mode de réalisation préféré de l'invention, lesdits premier et second moyens de réglage sont constitués par deux circuits distincts de fourniture d'une tension d'alimentation avec moyen de réglage de la puissance fournie.

De préférence également, chacun des deux circuits de fourniture d'une tension d'alimentation est un circuit de commande par modulation de largeur d'impulsions, ladite largeur d'impulsions pouvant être modifiée pour faire varier la puissance d'éclairage des LEDs dudit circuit.

De préférence également, ladite source de tension d'alimentation est un micro processeur à oscillateur de commande par impulsions, qui comporte un premier et un second moyens d'ajustage de la largeur des impulsions délivrées dans ledit premier et ledit second circuits, respectivement.

De préférence également, le support des LEDs est une carte électronique.

Selon un mode préféré de réalisation de l'invention, les LEDs sont disposées selon une distribution matricielle régulière, c'est-à-dire à rangées et colonnes régulièrement espacées.

Selon l'invention, le nombre de LEDs bleues est très inférieur au nombre de LEDs blanches, de préférence compris entre 20 et 30 % du nombre de LEDs blanches, plus préférablement environ 25%.

Un autre but de la présente invention est de fournir un procédé pour l'obtention de dispositifs de production de couleur blanche qui présentent une même couleur blanche, stable et non jaunâtre, par conséquent un procédé de mise au point de la couleur blanche, en d'autres termes un procédé permettant de s'affranchir des problèmes de dispersion qui existent pour les LEDs blanches.

Pour atteindre ce but, le procédé nouveau comporte les étapes suivantes :
- on fabrique un dispositif pour produire un éclairage blanc tel que décrit ci-dessus,
- on mesure la couleur émise par ledit dispositif en fin de fabrication,
- si la couleur est légèrement jaune, on augmente l'éclairage des LEDs bleues,
- si la couleur est trop bleue, on diminue l'éclairage des LEDs bleues.

Ces étapes sont répétées pour chaque dispositif de production d'éclairage blanc, de manière continue.

De préférence, l'augmentation/la diminution de l'éclairage des diodes électroluminescentes bleues est obtenue par modulation de la largeur des impulsions de commande électrique desdites diodes électroluminescentes bleues.

Selon un mode préféré de réalisation de l'invention, la mise au point peut se faire en automatique suite à un contrôle caméra.

D'autres avantages et caractéristiques de l'invention apparaîtront dans la description qui suit d'un exemple de réalisation de l'invention, non limitatif de la portée de la présente invention, et accompagnée des dessins annexés dans lesquels :
- la figure 1 représente schématiquement une carte électronique sur laquelle sont disposées les LEDs,
- la figure 2 représente schématiquement plus en détail la même carte électronique avec un exemple illustrant la séparation des deux circuits d'alimentation des LEDs.

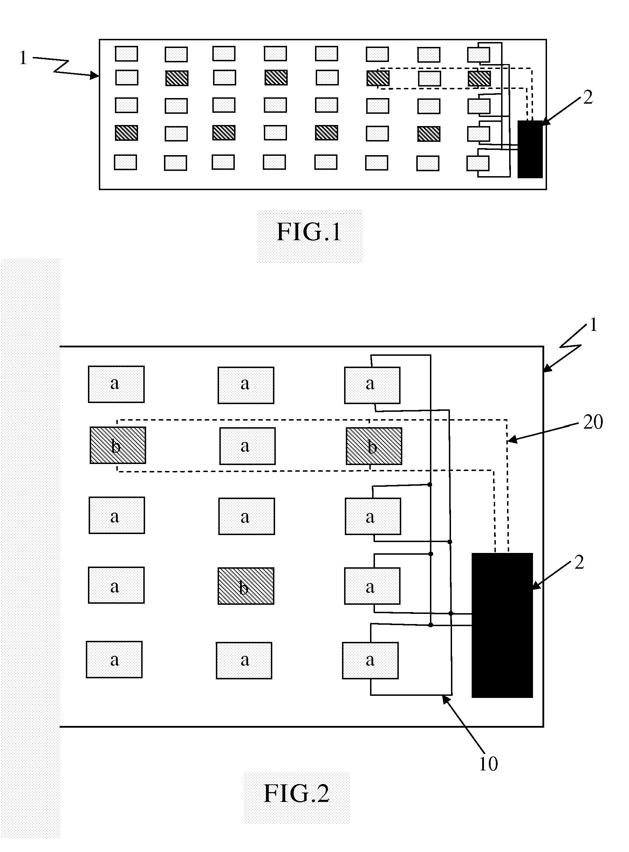

La référence 1 désigne le support des diodes électroluminescentes sous la forme d'une carte électronique. Pour illustrer l'invention, à titre d'exemple, on a représenté schématiquement, sur la figure 1, par des petits rectangles une distribution matricielle de LEDs à huit colonnes et cinq rangées. On peut de façon évidente avoir une disposition matricielle différente ou non matricielle, par exemple en cercles concentriques ou selon toutes autres dispositions géométriques ou non. Dans cette disposition de LEDs blanches représentées par des rectangles blancs sont intégrées quelques LEDs bleues représentées par des rectangles hachurés.

Dans le présent exemple de la figure 1, les LEDs bleues sont en nombre nettement inférieur à celui des LEDs blanches et sont réparties de manière relativement uniforme pour couvrir l'espace de la carte 1. Précisément dans cet exemple, on a représenté une distribution de 32 LEDs blanches et 8 LEDs bleues, à savoir un rapport de LEDs bleues/LEDs blanches de 8/32, soit 25%.

Comme on peut le voir plus en détails sur le dessin de la figure 2, un micro processeur 2 de la carte électronique 1 délivre une tension d'alimentation aux LEDs par deux circuits bien distincts : un circuit 10 pour les LEDs blanches (référencées « a » sur la figure 2) et un circuit 20 pour les LEDs bleues (référencées « b » sur la figure 2).

Les deux circuits, 10 et 20, sont représentés chacun alimentant quelques LEDs seulement. Il s'agit d'une illustration de la séparation des circuits d'alimentation 10, 20, des LEDs bleues « b » et des LEDs blanches « a », l'alimentation de toutes les LEDs du support 1 n'étant pas représentée pour des raisons de simplicité dans cette illustration.

Chacun des deux circuits comporte un moyen de réglage de l'intensité d'éclairage des LEDs alimentées par le circuit. A titre d'exemple, chaque circuit peut être relié à un oscillateur de commande par impulsions avec des moyens d'ajustage de la largeur des impulsions délivrées par l'oscillateur pour régler l'intensité d'éclairage des LEDs dudit circuit.

L'existence des deux circuits distincts ainsi ajustables séparément permet de bénéficier de l'éclairage maximal des LEDs blanches et, au contraire, de l'éclairage très faible des LEDs bleues.

De cette manière, on peut supprimer l'effet jaunâtre indésirable.

L'invention concerne aussi un procédé pour l'obtention de dispositifs de production de couleur blanche qui présentent une même couleur blanche, stable et non jaunâtre, par conséquent un procédé de mise au point de la couleur blanche.

Ce procédé à pour but de s'affranchir des problèmes de dispersion qui existent pour les LEDs blanches.

Le procédé comporte les étapes suivantes :
- on fabrique un dispositif pour produire un éclairage blanc tel que décrit ci-dessus,
- on mesure la couleur émise par ledit dispositif en fin de fabrication,
- si la couleur est légèrement jaune, on augmente l'éclairage des LEDs bleues « b »,
- si la couleur est trop bleue, on diminue l'éclairage des LEDs bleues « b ».

Ces étapes sont répétées pour chaque dispositif de production d'éclairage blanc, de manière continue.

L'augmentation et la diminution de l'éclairage des diodes électroluminescentes bleues « b » sont obtenues, par exemple, par modulation de la largeur des impulsions de commande électrique desdites diodes électroluminescentes bleues « b ».

Selon un mode préféré de réalisation de l'invention, la mise au point peut se faire en automatique suite à un contrôle caméra.

De façon générale, la mesure de couleur émise se fait par tout moyen de spectrométrie connu en soi.

Il va de soi que, sans sortir du cadre et de la portée de l'invention, le moyen de réglage pour régler l'intensité d'éclairage de ladite pluralité de LEDs blanches « a » et le moyen de réglage pour régler l'intensité d'éclairage des LEDs bleues « b » peuvent être tout moyen connu en soi de réglage de la puissance dans un circuit électrique.

## Revendications

1. Dispositif pour produire un éclairage blanc, comprenant une source de tension d'alimentation électrique, une pluralité de diodes électroluminescentes blanches (a) réparties sur un support (1), un premier moyen de réglage (10) pour régler l'intensité d'éclairage de ladite pluralité de diodes électroluminescentes blanches (a), **caractérisé en ce qu'**il comprend, de plus, sur ledit support (1), au moins une diode électroluminescente bleue (b), un second moyen de réglage (20) pour régler l'intensité d'éclairage de ladite diode électroluminescente bleue (b), et **en ce que** lesdits premier et second moyens de réglage (10, 20) sont actionnables de manière indépendante.

2. Dispositif selon la revendication 1, **caractérisé en ce que** lesdits premier et second moyens de réglage (10, 20) sont constitués par deux circuits distincts de fourniture d'une tension d'alimentation avec moyen de réglage de la puissance fournie.

3. Dispositif selon la revendication 2, **caractérisé en ce que** chacun des deux circuits (10, 20) de fourniture d'une tension d'alimentation est un circuit de commande par modulation de largeur d'impulsions, ladite largeur d'impulsions pouvant être modifiée pour faire varier la puissance d'éclairage des diodes électroluminescentes dudit circuit.

4. Dispositif selon l'une quelconque des revendications 2 et 3, **caractérisé en ce que** ladite source de tension d'alimentation est un micro processeur (2) à oscillateur de commande par impulsions, qui comporte un premier et un second moyens d'ajustage de la largeur des impulsions délivrées dans ledit premier (10) et ledit second (20) circuits, respectivement.

5. Dispositif selon l'une quelconque des revendications 2 à 4, **caractérisé en ce que** le support (1) des diodes électroluminescentes (a, b) est une carte électronique (1).

6. Dispositif selon la revendication 2 **caractérisé en ce que** les diodes électroluminescentes sont disposées sur le support (1) selon une distribution matricielle régulière, c'est-à-dire à rangées et colonnes régulièrement espacées.

7. Dispositif selon l'une quelconque des revendications 1 à 6, **caractérisé en ce que** le nombre de diodes électroluminescentes bleues (b) est très inférieur au nombre de diodes électroluminescentes blanches (a), de préférence compris entre 20 et 30 % du nombre de diodes électroluminescentes blanches (a), plus préférablement environ 25%.

8. Procédé de mise au point de la couleur émise par un dispositif de production de couleur blanche conforme à l'une quelconque des revendications 1 à 7, **caractérisé en ce qu'**il comporte les étapes suivantes :
- on fabrique ledit dispositif pour produire un éclairage blanc,
- on mesure la couleur émise par ledit dispositif en fin de fabrication,
- si la couleur est légèrement jaune, on augmente l'éclairage des diodes électroluminescentes bleues (b),
- si la couleur est trop bleue, on diminue l'éclairage des diodes électroluminescentes bleues (b).

9. Procédé selon la revendication 8, **caractérisé en ce que** l'augmentation/la diminution de l'éclairage des diodes électroluminescentes bleues (b) est obtenue par modulation de la largeur des impulsions de commande électrique desdites diodes électroluminescentes bleues (b).

10. Procédé selon l'une quelconque des revendications 8 et 9, **caractérisé en ce que** ladite mesure de la couleur est réalisée par le moyen d'un contrôle caméra, lequel entraîne automatiquement la mise au point de la couleur blanche.
